# EUROPÄISCHE PATENTANMELDUNG

(11) **EP 0 751 039 A2**
(43) Veröffentlichungstag der Anmeldung: **02.01.1997**
(21) Anmeldenummer: 96107151.1
(22) Anmeldetag: 07.05.1996
(51) Int. Cl.: B60N 3/10

(54) **Becherhalter für die Verwendung in Fahrzeugen**

(30) Priorität: 29.06.1995 DE 19523697
(71) Anmelder: Preh-Werke GmbH & Co. KG, 97616 Bad Neustadt (DE)
(72) Erfinder: Conrad, Holger, 98646 Hessberg (DE)
(74) Vertreter: Pfeiffer, Helmut, Dipl.-Ing.

(57) **Zusammenfassung**

2.1
   Diese weisen einschwenkbare Becherklammern auf, deren Platzbedarf eine universelle Verwendung nicht zuläßt.
2.2
   Hiergegen weist der neue Becherhalter die Merkmale auf, daß die Becherklammerarme (4, 5, 6, 7) gegenüber einem Rahmenkörper (2) zwei Drehachsen (11, 18 bzw. 19) aufweisen, von denen eine Achse (18 bzw. 19) bei der Einschwenkbewegung aus der Senkrechten in eine Schräglage wandert.
2.3
   Hierdurch kann eine Verwendung des Becherhalters auch bei Fahrzeugen mit geringem Platzbedarf erfolgen.

## Beschreibung

Die Erfindung betrifft einen Becherhalter für die Verwendung in Fahrzeugen, wobei der Becherhalter einschwenkbare Becherklammerarme aufweist. Die einschwenkbaren Klammerarme benötigen ausreichend großen Bauraum, der zum Beispiel bei Montage des Becherhalters an einem Fahrzeugarmaturenbrett nicht ausreichend zur Verfügung steht.

Hiervon ausgehend liegt der Erfindung daher die Aufgabe zugrunde, Maßnahmen aufzufinden, mit denen bei beschränktem Bauraum eine Verwendung des Becherhalters möglich wird.

Diese Aufgabe ist durch die im Kennzeichen des Patentanspruchs 1 angegebenen Merkmale gelöst. Vorteilhafte Weiterbildungen sind mit den Unteransprüchen angegeben.

Ein Ausführungsbeispiel der Erfindung ist in der Zeichnung dargestellt.

Es zeigen:
**Fig. 1**
   einen erfindungsgemäßen Becherhalter,
**Fig. 2 und 3**
   Schnittansichten aus Fig. 1 entsprechend der Linie A-A, wobei Fig. 2 den ausgefahrenen und Fig. 3 den eingefahrenen Zustand zeigt.

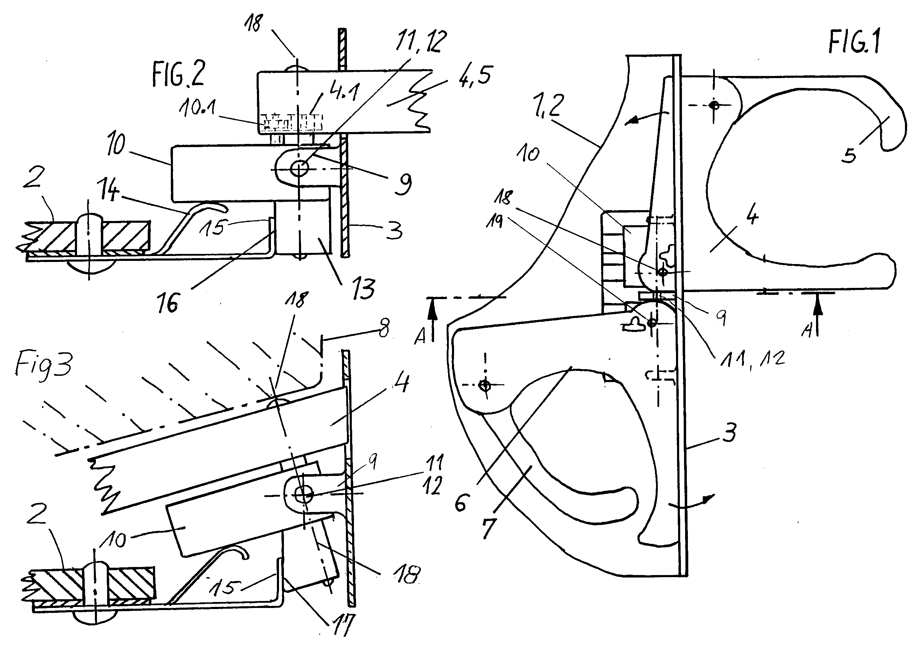

Fig. 1 zeigt einen Becherhalter 1 bestehend aus einem Rahmenkörper 2 mit Blende 3, wobei die Blende 3 auf einem Armaturenbrett eines Fahrzeuges befestigt sein kann und der Rahmenkörper 2 in das Armaturengehäuse hineinragt. Aus dem Rahmenkörper 2 bzw. der Blende 3 ragen zwei Becherklammerarme 4, 5 heraus, zwischen denen ein Getränkebecher gehalten werden kann. Die Klammerarme 4, 5 sind einklappbar in den Rahmenkörper 2 einschiebbar, wie in Fig. 3 erkennbar ist. Ein zweiter Becherhalter mit den Klammerarmen 6, 7 ist in eingeschobener Position in Fig. 1 dargestellt.

Fig. 2 zeigt einen Schnitt gemäß der Linie A-A aus Fig. 1, aus der die Anordnung der ausgefahrenen Klammerarme 4, 5 ersichtlich ist und Fig. 3 einen Schnitt, aus dem die Anordnung der eingeklappten Klammerarme 4, 5 ersichtlich ist.

In Fig. 3 ist in Strichpunktlinien eine Polizeikante 8 eingetragen, d. h. diese begrenzt einen Bauraum, in den Elemente des Becherhalters 1 nicht eintreten dürfen.

Erfindungsgemäß ist hierfür nun vorgesehen, daß die Klammerarme 4, 5 und 6, 7 bei der Einklapp-Einschiebebewegung (Pfeil am oberen Klammerarm 4) aus der Waagerechten in eine Schräglage übergeht und dadurch die Polizeikante 8 nicht überfährt.

Die mittleren Klammerarme 4, 6 sind für diesen Zweck auf je einem in mit dem Rahmenkörper 2 verbundenen Lagerböcken 9 drehbaren Gundkörper 10 gehalten, der von einem Dämpfungselement gebildet sein kann, das mit einem Zahnrad 10.1 in ein Zahnsegment 4.1 des Arms 4 eingreift. Die Klammerarme 4, 6 greifen mit einem Zapfenansatz 12 des Grundkörpers 10 in eine Lagerbohrung 11. Nachstehend ist die Lagerbohrung 11 auch als Drehachse bezeichnet. Der Zapfen 11 bildet die horizontale Dreh- oder Schwenkachse, die es ermöglicht, die Klammerarme aus der Waagerechten in eine Schräglage zu bringen. Das Element 4 schwenkt bei manuellen Eindrücken um eine Achse 18 und das Element 6 um eine Achse 19.

In Fig. 2, 3 ist erkennbar, daß die Achse 18 von einem Bolzen gebildet wird, der oben den Klammerarm 4 drehfest trägt, den Grundkörper 10 durchdringt und in diesem drehbar ist, wobei der Grundkörper 10 innerhalb des Rahmenkörpers 2 unverdrehbar so gehalten ist, daß er die Kippbewegung aus der Waagerechten in die Schräglage durchführen kann. Am unteren Ende des Bolzens 18 ist ein Exzenternocken 13 verdrehsicher befestigt.

Dieser Exzenternocken 13 stützt sich unter der Belastung einer Blattfeder 14, die gegen den Grundkörper 10 wirkt, gegen eine Anlauffläche 15 ab, die hier von einem Winkelstück der Blattfeder 14 gebildet ist. Der Exzenternocken 13 ist so ausgebildet, daß bei ausgefahrenen Klammerarmen 4, 6, wie in Fig. 2 dargestellt ist, der Exzentergrundkreis 16 gegen die Anlauffläche 15 anliegt, womit die Drehachse 18 um den Zapfenansatz 12 in der Lagerbohrung 11 in die Senkrechte ausschwenken kann und die Klammerarme 4, 6 entsprechend in die Waagerechte kommen.

Bei eingefahrenen Klammerarmen 4, 6 sind die Klammerarme 5, 7 eingeklappt und ein um 90° zum Exzentergrundkreis 16 versetzter Exzenternockenkreis 17 drückt gegen die Anlauffläche 15, wodurch der Grundkörper 10 die Drehachse 18 um den Zapfenansatz 12 in der Lagerbohrung 11 aus der Senkrechten in eine Schräglage gedrückt wird und die Klammerarme 4, 6 entsprechend in die Schräglage kommen. Der Exzenternochen 13 weist im Bereich des Exzenternockenkreises 17 eine Anschrägung auf, die ausgehend vom freien Ende des Exzenternockens 13 zum Grundkörper 10 hinabfällt, damit auch in gekipptem Zustand eine flächige Anlage an der Anlauffläche 15 möglich ist.

Es versteht sich von selbst, daß der Becherhalter 1 alle für eine ausreichende Funktion notwendigen Bauelemente aufweist, auch wenn diese nicht näher beschrieben sind, da kein weiterer Zusammenhang mit der Erfindung besteht.

Mit der erfindungsgemäßen Ausführung des Becherhalters ist eine platzsparende Anordnung möglich geworden.

## Patentansprüche

1. Becherhalter für die Verwendung in Fahrzeugen, wobei der Becherhalter einschwenkbare Becherklammerarme aufweist,
**dadurch gekennzeichnet**,
daß die Becherklammerarme (4, 6) gegenüber einem Rahmenkörper (2) zwei Drehachsen (11, 18 bzw. 19) aufweisen, von denen eine Achse (18 bzw. 19) bei der Einschwenkbewegung aus der Senkrechten in eine Schräglage wandert.

2. Becherhalter nach Anspruch 1,
**dadurch gekennzeichnet**,
daß die Klammerarme (4, 6) mittels eines Zapfenansatzes (12) eines sie über einen Bolzen (18) tragenden Grundköpers (10) schwenkbar am Rahmenkörper (2) gelagert sind, wobei der Bolzen (18) drehfest verbunden einen Exzenternocken (13) aufweist, der bei der Einsckwenkbewegung des Klammerarms (4, 6) die Drehachse (18) bzw. den Bolzen (18) um die Drehachse (11) und damit die Klammerarme (4, 5, 6, 7) in eine entsprechende Schräglage drückt.

3. Becherhalter nach Anspruch 2,
**dadurch gekennzeichnet**,
daß der Exzenternocken (13) unter der Kraft einer Blattfeder (14) gegen eine Anlauffläche (15) anliegt.

4. Becherhalter nach Anspruch 3,
**dadurch gekennzeichnet**,
daß die Anlauffläche (15) von einem Winkelansatz der Blattfeder (14) gebildet wird.

5. Becherhalter nach Anspruch 2,
**dadurch gekennzeichnet**,
daß der Exzenternocken (13) einen Exzentergrundkreis (16) und einen Exzenternockenkreis (17) um 90° versetzt zueinander aufweist, wobei der Exzenternocken (13) im Bereich des Exzenternockenkreises (17) ausgehend von seinem freien Ende des Exzenternockens (13) zum Grundkörper (10) hin abfallend eine Anschrägung aufweist.
